# EUROPEAN PATENT SPECIFICATION

(11) **EP 1 020 350 B1**
(45) Date of publication and mention of the grant of the patent: **20.07.2005**
(21) Application number: 00100362.3
(22) Date of filing: 07.01.2000
(51) Int. Cl.: B62M 7/12

(54) **Swing-type power unit**
Schwenkantriebseinheit
Unité d'entraînement à bras pivotant

(30) Priority: 11.01.1999 JP 455699
(43) Date of publication of application: 19.07.2000
(73) Proprietor: Honda Giken Kogyo Kabushiki Kaisha, Minato-ku, Tokyo (JP)
(72) Inventor: Sekiya, Yoshiyuki, 1-4-1 Chuo, Wako-shi, Saitama-ken (JP); Yagasaki, Akio, 1-4-1 Chuo, Wako-shi, Saitama-ken (JP); Kuwata, Hideyuki, c/oHonda Giken Kogyo K. K., Kikuchi-gun, Kumamoto (JP)
(74) Representative: Liska, Horst, Dr.-Ing.

(56) References cited:
- FR-A- 2 713 562
- PATENT ABSTRACTS OF JAPAN vol. 017, no. 459 (M-1467), 23 August 1993 (1993-08-23) & JP 05 105177 A (YAMAHA MOTOR CO LTD), 27 April 1993 (1993-04-27)

## Description

The present invention relates to a swing-type power unit integrally including an engine and a transmission for transmitting a drive force of the engine to a drive wheel and being swingably supported by a body frame.

Such a swing-type power unit is suitable for a simple power source for a small-sized motorcycle or motor-tricycle and has been disclosed, for example, in Japanese Patent No. 2649179. In the power unit described in the above document, an engine block of the swing-type power unit is divided along a parting plane perpendicular to a crank shaft into two parts, and a transmission casing is integrally formed on one of the two parts of the engine block.

The above-described swing-type power unit, however, has problems. Since the transmission casing is integrally formed on one of the two-divided parts of the engine block, the one of the two-divided parts is enlarged and thereby the manufacturing cost is increased, and also since the engine cannot be separated from the transmission, the transmission obstructs the assembly and transportation of the engine. Also since the engine is integrated with the transmission, it is impossible to combine one of engines different in specification with one of transmissions different in specification. This obstructs the general versatility of the engine and transmission.

Another swing-type power unit is disclosed in document FR A 2713562 and it corresponds to the preamble of claim 1.

In view of the foregoing, the present invention has been made, and an object of the present invention is to provide a swing-type power unit integrally including an engine and a transmission, which is capable of facilitating the manufacture, assembly and handling of the engine, and allowing free combination of the engine and transmission thereby enhancing the general

To achieve the above object, according to an invention described in claim 1, there is provided a swing-type power unit swingably supported by a body frame of a small-sized motorcycle or motor-tricycle, including: an engine; and a transmission for transmitting a drive force of the engine to a drive wheel, the transmission being integrally connected to the engine; wherein an engine block for supporting a crank shaft of the engine is separable from a casing of the transmission.

With this configuration, since the engine block for supporting the crank shaft of the engine is separable from the casing of the transmission, it is possible to reduce the sizes of the engine block and the casing and hence to lower the manufacturing cost. Further, since the engine is independent from the transmission, it is not only to easily assemble and transport the engine, but also to freely combine engines different in specification with transmissions different in specification and hence to improve the general versatility of the engine and transmission.

According to the invention described in claim 1, the engine block is divided into two parts along a parting plane including the axial line of the crank shaft; and a cylinder block for containing a piston is integrally formed on one of the two parts of the engine block.

With this configuration, it is possible to previously assemble a piston, a crank shaft, and the like with one of the two-divided parts of the engine block, and hence to facilitate the assembly of the engine.

According to an invention described in claim 2, in addition to the configuration of the invention described in claim 1, wherein an input rotational member of the transmission is provided at one end of the crank shaft supported by the engine block; and an opening for allowing the input rotational member to pass therethrough when the engine block is connected to the casing of the transmission is formed in the casing.

With this configuration, since the input rotational member of the transmission provided on the crank shaft is allowed to pass through the opening formed in the transmission casing, even if the input rotational member is sub-assembled with the crank shaft of the engine, the engine block can be connected to the transmission casing without occurrence of any problem.

According to an invention described in claim 3, in addition to the configuration of the invention described in claim 1, the transmission is a belt-type continuously variable transmission; and the engine block is integrally connected to the casing of the transmission at connection portions surrounding the outer periphery of the crank shaft with a plurality of bolts in such a manner that spaces constituting heat insulating air layers are formed in the connection portions.

With this configuration, when the engine block is connected to the transmission casing with a plurality of bolts disposed around the outer periphery of the crank shaft, the spaces constituting heat insulation air layers are formed in the connection portions, it is possible to suppress thermal transfer from the engine to the transmission and hence to ensure a high durability of the belt-type continuously variable transmission.

Hereinafter, an embodiment of the present invention will be described with reference to the accompanying drawings.
- Fig. 1: is a side view showing an entire configuration of a scooter-type motorcycle.
- Fig. 2: is an enlarged view of an essential portion shown in Fig. 1.
- Fig. 3: is a sectional view taken on line 3-3 of Fig. 2.
- Fig. 4: is a view seen along line 4-4 of Fig. 3.
- Fig. 5: is a sectional view taken on line 5-5 of Fig. 3.
- Fig. 6: is a sectional view taken on line 6-6 of Fig. 3.
- Fig. 7: is a sectional view, taken on line 7-7 of Fig. 3.
- Fig. 8: is an enlarged view of an essential portion of Fig. 2.
- Fig. 9: is a sectional view taken on line 9-9 of Fig. 8.
- Fig. 10: is a view illustrating the function of the present invention upon assembly of the power unit.

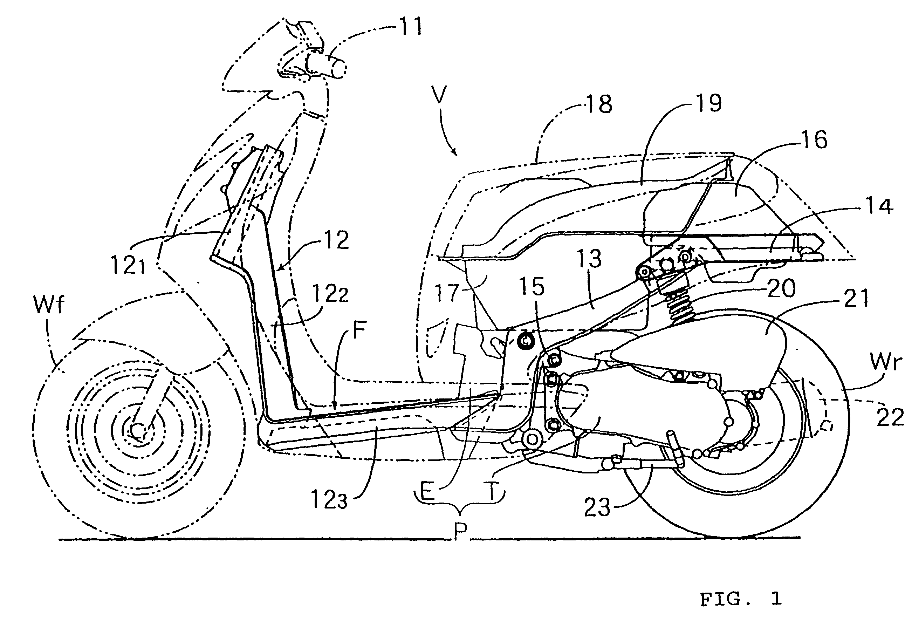

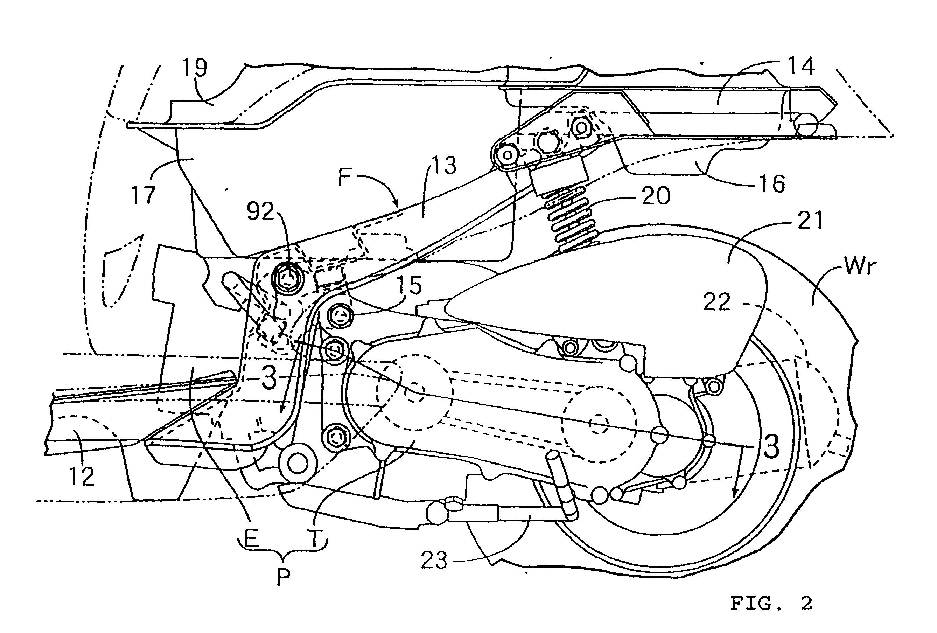

Referring to Figs. 1 and 2, a scooter-type motorcycle V includes a front wheel Wf steered by a steering handle 11 and a rear wheel Wr driven by a swing-type power unit P. A body frame F of the motorcycle V is divided into three parts, that is, a front frame 12, a center frame 13, and a rear frame 14. The front frame 12 is made from an aluminum alloy by casting, and integrally includes a head pipe 12₁, a down tube 12₂, and a step floor supporting portion 12₃. The center frame 13 by means of which the power unit P is vertically swingably supported via a pivot 15 is made from an aluminum alloy by casting and is connected to the rear end of the front frame 12. The rear frame 14 extending rearwardly, upwardly from the power unit P is formed of an annular pipe. A fuel tank 16 is supported on the upper surface of the rear frame 14. A helmet case 17 is supported on the upper surface of the center frame 13. The helmet case 17 and the fuel tank 16 are openably/closably covered with a cover 19 integrated with a seat 18.

The power unit P includes a water-cooled type single-cylinder/four-cycle engine E with its cylinder directed forwardly of the vehicular body, and a belt-type continuously variable transmission T which is integrally connected to the left side surface of the engine E and extends rearwardly of the vehicular body therefrom. The upper rear surface of the belt-type continuously variable transmission T is connected to the rear end of the center frame 13 via a rear cushion 20. An air cleaner 21 is supported on the upper surface of the belt-type continuously variable transmission T. A muffler 22 is supported on the right side surface of the belt-type continuously variable transmission T, and a stand 23 is supported on the back surface of the engine E.

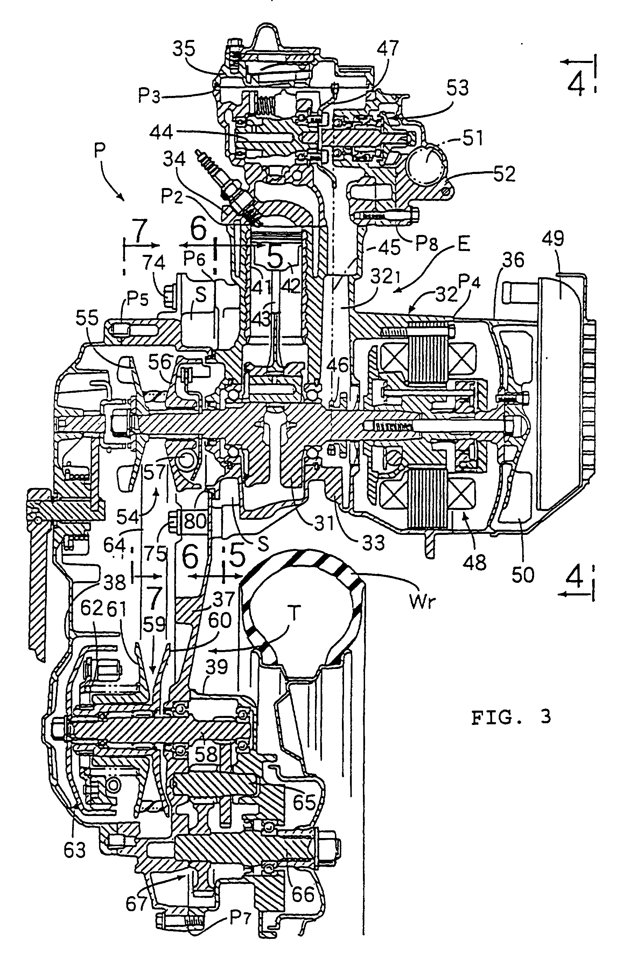

As is apparent from Figs. 3 to 5, the engine E is divided along a parting plane P₁ extending in the vertical direction along a crank shaft 31 into a first engine block 32 and a second engine block 33. The first engine block 32 constitutes a cylinder block and a half of a crank case, and the second engine block 33 constitutes the other half of the crank case. A cylinder head 34 is connected to the front end of the first engine block 32 via a parting plane P₂, and a head cover 35 is connected to the front end of the cylinder head 34 via a parting plane P₃. A generator cover 36 is connected to the right side surfaces of the first and second engine blocks 32 and 33 via a parting plane P₄.

The belt-type continuously variable transmission T includes a right side first transmission casing 37 and a left side second transmission casing 38 which are connected to each other via a parting plane P₅. The right side surface of a front portion of the first transmission casing 37 is connected to the left side surfaces of the first and second engine blocks 32 and 33 via a parting plane P₆. The right side surface of a rear portion of the first transmission casing 37 is connected to a reducer casing 39 via a parting plane P₇.

As shown in Fig. 3, a piston 42 slidably fitted in a cylinder 41 provided in the first engine block 32 is connected to a crank shaft 31 via a connecting rod 43. A cam shaft 44 is rotatably supported by the cylinder head 34, and intake valves and exhaust valves (not shown) provided in the cylinder head 34 are opened/closed by the cam shaft 44. A timing chain 45 contained in a chain passage 32₁ provided in the first engine block 32 is wound around a drive sprocket 46 provided on the crank shaft 31 and a driven sprocket 47 provided on the cam shaft 44. The cam shaft 44 makes one revolution for two revolutions of the crank shaft 31.

An ac generator 48 provided on the right side of the crank shaft 31 is covered with the generator cover 36, and a radiator 49 is provided on the right side of the generator cover 36. A cooling fan 50 fixed at the right end of the crank shaft 31 for supplying cooling wind to the radiator 49 is disposed between the ac generator 48 and the radiator 49. A thermostat case 52 containing a thermostat 51 is connected to the right side surface of the cylinder head 34 via a parting plane P₈. A cooling water pump 53 provided at the right end of the cam shaft 44 is contained in a space surrounded by the cylinder head 34 and the thermostat case 52.

A drive pulley 54 as an input rotational member of the belt-type continuously variable transmission T is provided at the left end of the crank shaft 31 projecting in the first and second transmission casings 37 and 38. The drive pulley 54 includes a fixed side pulley half 55 fixed on the crank shaft 31, and a movable side pulley half 56 movable close to or apart from the fixed side pulley half 55. The movable side pulley half 56 is biased toward the fixed side pulley half 55 by a centrifugal weight 57 moved radially outwardly in accordance with the increased rotational number of the crank shaft 31.

A driven pulley 59 is provided on an output shaft 58 supported between a rear portion of the first transmission casing 37 and the reducer casing 39. The driven pulley 59 includes a fixed side pulley half 60 relatively rotatably supported by the output shaft 58, and a movable side pulley half 61 movable close to or apart from the fixed side pulley half 60. The movable pulley half 61 is biased toward the fixed side pulley half 60 by a spring 62. A starting clutch 63 is provided between the fixed pulley half 60 and the output shaft 58. An endless V-belt 64 is wound between the drive pulley 54 and the driven pulley 59.

An intermediate shaft 65 and an axle 66 in parallel to the output shaft 58 are supported between the first transmission casing 37 and the reducer casing 39. A reduction gear train 67 is provided among the output shaft 58, the intermediate shaft 65, and the axle 66. The rear wheel Wr is provided at the right end of the axle 66 projecting rightwardly through the reducer casing 39.

The rotation of the crank shaft 31 of the engine E is transmitted to the drive pulley 54 as the input member of the belt-type continuously variable transmission T, and is transmitted from the drive pulley 54 to the rear wheel Wr via the V-belt 64, the driven pulley 59, the starting clutch 63, and the reduction gear train 67.

Upon low speed rotation of the engine E, since the centrifugal force applied to the centrifugal weight 57 of the drive pulley 54 is small, the groove width between the fixed side pulley half 60 and the movable side pulley half 61 is reduced by the biasing force of the spring 62 of the driven pulley 59, with a result that the speed change ratio becomes the "LOW" ratio. As the rotational number of the crank shaft 31 is increased from such a state, the centrifugal force applied to the centrifugal weight 57 is increased, so that the groove width between the fixed side pulley half 55 and the movable side pulley half 56 of the drive pulley 54 is reduced and correspondingly the groove width between the fixed side pulley half 60 and the movable side pulley half 61 of the driven pulley 59 is increased. As a result, the speed change ratio is continuously variably changed from the ratio "LOW" to the ratio "TOP".

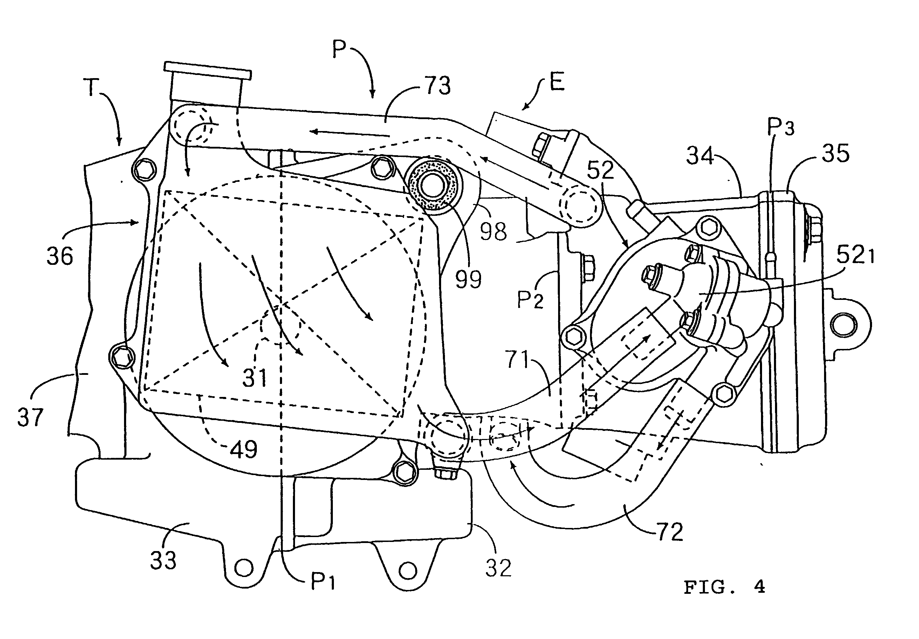

As is apparent from Figs. 3 and 4, a lower front portion of the radiator 49 is connected to the thermostat cover 52₁ by a cooling water pipe line 71; the thermostat case 52 is connected to the first engine block 32 by a cooling water pipe line 72; and the cylinder head 34 is connected to an upper rear portion of the radiator 49 by a cooling water pipe line 73.

In a state in which the warming operation of the engine has been completed, cooling water discharged from the cooling water pump 53 is supplied to a water jacket provided in the first engine block 32 and the cylinder head 34 via the thermostat case 52 and the cooling water pipe line 72. During passing through the water jacket, the cooling water cools the engine E. Then, the cooling water is supplied to the radiator 49 via the cooling water pipe line 73. During passing through the radiator 49, the temperature of the cooling water is reduced. The cooling water is then returned to the cooling water pump 53 via the cooling water pipe line 71 and the thermostat 51. During warming operation of the engine E, that is, when the temperature of the cooling water is low, the thermostat 51 is operated to allow the cooling water to be circulated in the engine E not by way of the radiator 49, so that the temperature of the cooling water is rapidly increased.

In this way, the accessories for cooling the engine such as the radiator 49, the cooling fan 50, the thermostat 51, the cooling water pump 53, and the cooling water pipe lines 71, 72 and 73 are concentratedly arranged on the right side surface of the engine E. As a result, the accessories can be efficiently mounted/dismounted along one direction without largely changing the posture of the engine E upon assembly or maintenance, and further the lengths of the cooling water pipe lines 71, 72 and 73 can be minimized.

In particular, since the belt-type continuously variable transmission T is separable from the engine E, it is possible not only to facilitate the transportation of the engine E and the change in posture of the engine E, but also to make stable the posture of the engine E in such a manner as to allow the accessories to be easily mounted/dismounted, by supporting the engine E while directing downwardly the parting plane P₆ to which the belt-type continuously variable transmission T is connected. Since the timing chain 45 for driving the cam shaft 44 and the cooling water pump 53 is also disposed on the right side surface of the engine E, the timing chain 45 can be assembled simultaneously with the assembly of the cooling water pump 53, to thereby further improve the workability. Further, as compared with the conventional integral structure in which the engine block is not separable from the transmission casing, it is possible not only to miniaturize individual parts and hence to reduce the cost required for the molds, but also to combine a plurality of kinds of engines with a plurality of kinds of transmissions in various manners and hence to improve the general versatility.

The engine block is divided along the axial line of the crank shaft 31 into the first and second engine blocks 32 and 33, and further the cylinder 41, the piston 42, the connecting rod 43, and the crank shaft 31 can be previously assembled to the first engine block 32 side, and accordingly, it is possible to facilitate the assembly of the engine E.

As is apparent from Fig. 3 and Figs. 5 to 7, the first and second engine blocks 32 and 33 are integrally connected to the first transmission casing 37 with two bolts 74 and two bolts 75 screwed from the first transmission casing 37 side. The heads of the front side two bolts 74 for connecting the first transmission casing 37 to the first engine block 32 are exposed outside the belt-type continuously variable transmission T. The heads of the rear side two bolts 75 for connecting the first transmission casing 37 to the second engine block 33 are covered with the second transmission casing 38 and are not viewed from the outside of the belt-type continuously variable transmission T.

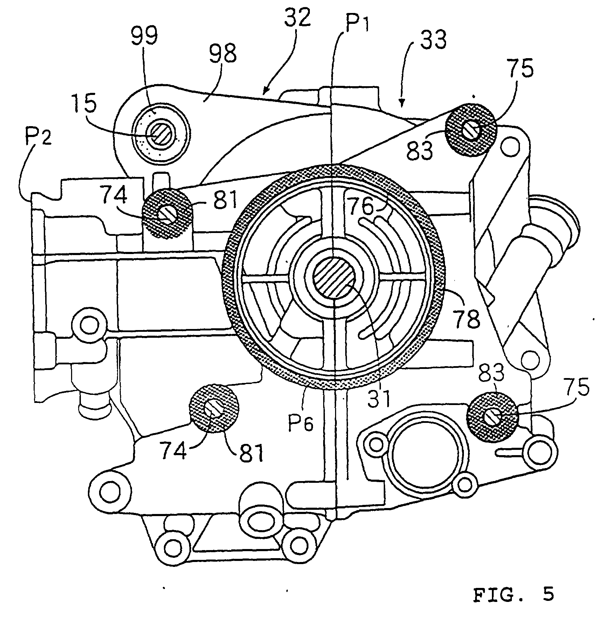

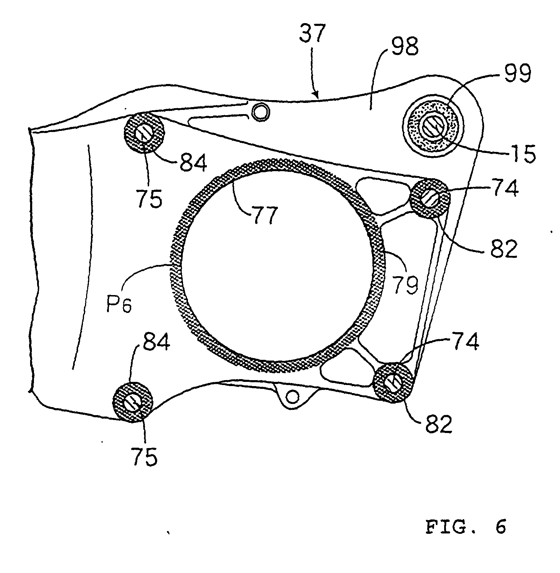

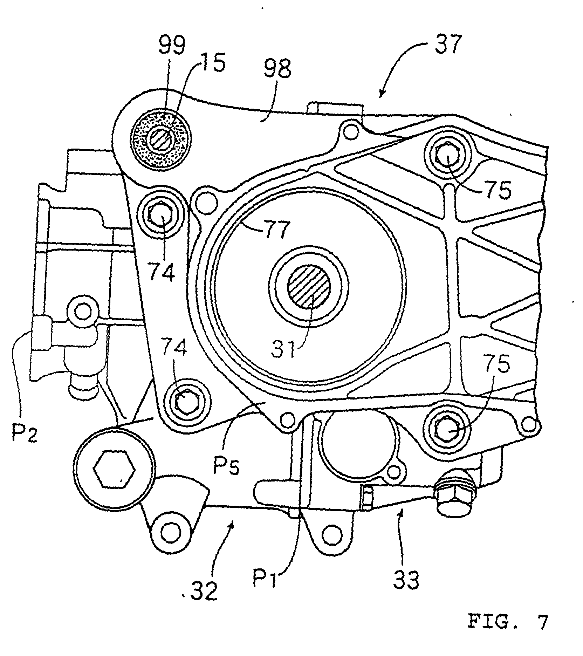

A circular opening 76 (see Fig. 5) centered at the crank shaft 31 is formed in the left side surfaces of the first and second engine blocks 32 and 33. A circular opening 77 (see Figs. 6 and 7) centered at the crank shaft 31 is also formed in the first transmission casing 37. When the first and second engine blocks 32 and 33 are connected to the first transmission casing 37, an annular seat 78 formed at the peripheral edge of the opening 76 formed in the first and second engine blocks 32 and 33 is brought into contact with an annular seat 79 formed at the peripheral edge of the opening 77 formed into the first transmission casing 37 via an annular seal member 80 (see Fig. 3). The diameter of the opening 77 of the first transmission casing 37 is slightly larger than the maximum diameter of the drive pulley 54 of the belt-type continuously variable transmission T, and accordingly, the drive pulley 54 is allowed to pass through the opening 77 of the first transmission casing 37.

Two bosses 81 and two bosses 82, through which the front side two bolts 74 pass, project from the first engine block 32 and the first transmission casing 37, respectively. Two bosses 83 and two bosses 84, through which the rear side two bolts 75 pass, project from the second engine block 33 and the first transmission casing 37, respectively.

Accordingly, when the first and second engine blocks 32 and 33 are connected to the first transmission casing 37 with the four bolts 74 and 75, the four bosses 81 and 83 of the first and second engine blocks 32 and 33 are brought into contact with the four bosses 82 and 84 of the first transmission casing 37, respectively. In Figs. 5 and 6, the portions at which the first and second engine blocks 32 and 33 are in contact with the first transmission casing 37 are designated by crosshatching.

Spaces S (see Fig. 3) constituting heat insulating air layers are formed between the seat 78 of the first and second engine blocks 32 and 33 and the seat 79 of the first transmission casing 37, which are in contact therewith, and between the bosses 81 and 83 of the first and second engine blocks 32 and 33 and the bosses 82 and 84 of the first transmission casing 37, which are in contact therewith. By forming the spaces S constituting the heat insulating air layers between the first and second engine blocks 32 and 33 and the first transmission casing 37 as described above, it is possible to prevent the heat transfer from the engine E to the belt-type continuously variable transmission T, and hence to ensure the durability of the V-belt 64 being weak against heat without increasing the cooling function of the belt-type continuously variable transmission T so much.

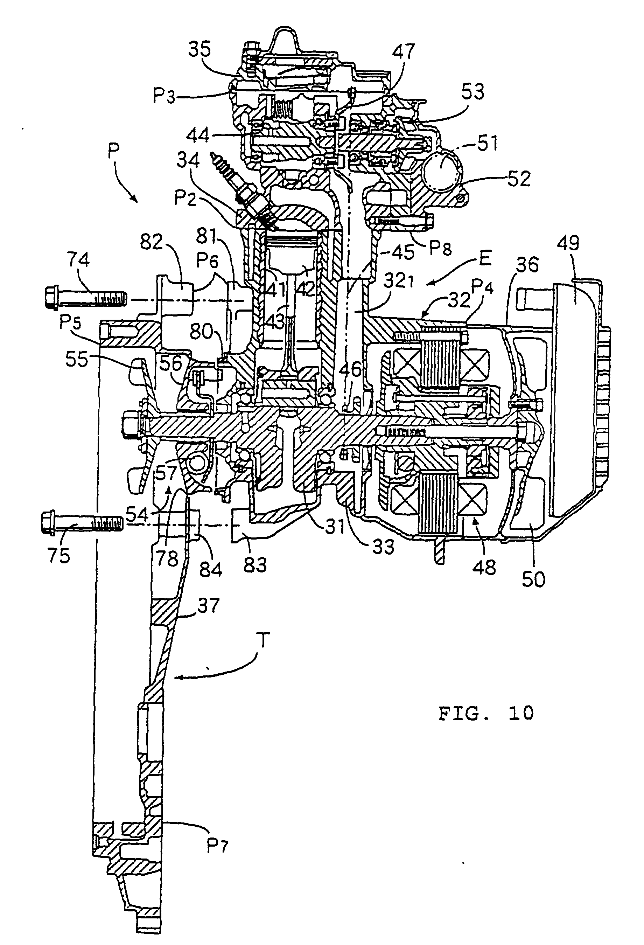

As shown in Fig. 10, upon assembly of the power unit P, the drive pulley 54 of the belt-type continuously variable transmission T is assembled with the crank shaft 31 of the engine E previously sub-assembled, and then the first and second engine blocks 32 and 33 are connected to the first transmission casing 37 with the four bolts 74 and 75. At this time, since the diameter of the opening 77 of the first transmission casing 37 is larger than the maximum outside diameter of the drive pulley 54 assembled with the crank shaft 31, the first and second engine blocks 32 and 33 can be easily connected to the first transmission casing 37, to thereby enhance the assembling performance.

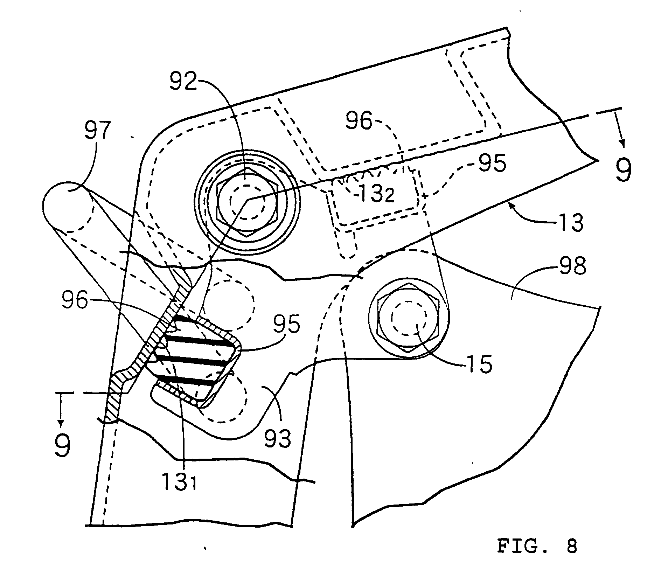

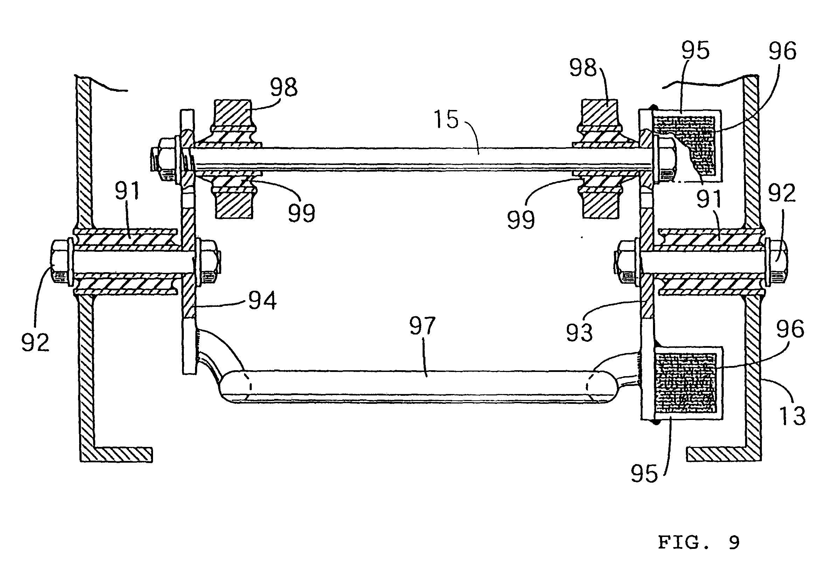

As shown in Figs. 8 and 9, a pair of right and left bolts 92 are supported by the center frame 13 via rubber bushes 91, and right and left link plates 93 and 94 are swingably supported by the bolts 92. Stopper rubbers 96 are mounted in two box-like stopper rubber supporting members 95 provided on the outer side surface of the link plate 93 positioned on the left side of the vehicular body. Two receiving planes 13₁ and 13₂ to be in contact with the stopper rubbers 96 are formed on the center frame 13. The right and left link plates 93 and 94 are integrally connected to each other via a connecting rod 97 and the pivot 15. A pair of right and left hanger brackets 98 projecting forwardly, upwardly from the engine E are supported by the pivot 15 via rubber bushes 99.

A load inputted from the power unit P to the pivot 15 via the right and left hanger brackets 98 is absorbed by elastic deformation of the rubber bushes 99 for supporting the pivot 15, and is also absorbed by elastic deformation of the stopper rubbers 96 which are pressed on the receiving planes 13₁ and 13₂ of the center frame 13 by swing motion of the link plates 93 and 94 around the bolts 92. The above load is also absorbed by elastic deformation of the rubber bushes 91 for supporting the bolts 92 on the center frame 13.

While the embodiment of the present invention will be described in detail, the present invention is not limited thereto, and it is to be understood that many changes in design may be made without departing from the scope of the present invention.

For example, in the embodiment, description has been made of the swing-type power unit of the motorcycle V; however, the swing-type power unit P of the present invention can be applied to a motor-tricycle. Further, the present invention can be applied not only to the combination of one of a plurality of kinds of the engines E different in specification and one of a plurality of kinds of the belt-type continuously variable transmissions T different in specification, but also to the combination of one kind of the engine E and one kind of the belt-type continuously variable transmission T.

The invention provides a swing-type power unit integrally including an engine and a transmission, which is capable of facilitating the manufacture, assembly and handling of the engine, and allowing free combination of the engine and transmission thereby enhancing the general versatility thereof.

To achieve this, a swing-type power unit P integrally includes an engine E and a transmission T for transmitting a drive force of the engine E to a drive wheel Wr, and is swingably supported by a body frame. An engine block is divided into first and second engine blocks 32 and 33 which are disposed on the front and rear sides with a crank shaft 31 put therebetween, respectively. Casings 37 and 38 of the belt-type continuously variable transmission T are removably connected to the left side surfaces of the first and second engine blocks 32 and 33 with bolts 74 and 75.

## Claims

1. A swing-type power unit swingably supported by a body frame (F) of a small-sized motorcycle or motortricycle, comprising:
an engine (E) having a cylinder block for containing a piston (42); and
a transmission (T) for transmitting a drive force of said engine (E) to a
drive wheel (Wr), said transmission (T) being integrally connected to said engine (E);
wherein an engine block (32, 33) for supporting a crank shaft (31) of said engine (E) is divided in two parts along a parting plane (P₁) and is separable from a casing (37, 38) of said transmission (T),
**characterized in that** the parting plane (P₁) deviding said engine block (32, 33) into two parts includes the axial line of said crank shaft (31); and
said cylinder block is integrally formed on one of said two parts of said engine block (32, 33).

2. A swing-type power unit according to claim 1, wherein an input rotational member (54) of said transmission (T) is provided at one end of said crank shaft (31) supported by said engine block (32, 33); and an opening (77) for allowing said input rotational member (54) to pass therethrough when said engine block (32, 33) is connected to said casing (37, 38) of said transmission (T) is formed in said casing (36, 37).

3. A swing-type power unit according to claim 1, wherein said transmission (T) is a belt-type continuously variable transmission; and said engine block (32, 33) is integrally connected to said casing (37, 38) of said transmission (T) at connection portions surrounding the outer periphery of said crank shaft (31) with a plurality of bolts (74, 75) in such a manner that spaces (S) constituting heat insulating air layers are formed in said connection portions.

## Patentansprüche

1. Schwenktyp-Antriebseinheit, die schwenkbar durch einen Karosserierahmen (F) eines kleinen Motorrades oder Motordreirades unterstützt ist, umfassend:
eine Maschine (E), die einen Zylinderblock zum Aufnehmen eines Kolbens (42) aufweist; und
ein Getriebe (T) zum Übertragen einer Antriebskraft der Maschine (E) auf ein Antriebsrad (Wr), wobei das Getriebe (T) integral mit der Maschine (E) verbunden ist;
wobei ein Maschinenblock (32, 33) zum Unterstützen einer Kurbelwelle (31) der Maschine (E) längs einer Trennebene (P₁) in zwei Teile unterteilt ist und von einem Gehäuse (37, 38) des Getriebes (T) trennbar ist, **dadurch gekennzeichnet, dass**
die Trennebene (P1) den Maschinenblock (32, 33) in zwei Teile unterteilt und die Axiallinie der Kurbelwelle (31) enthält; und
der Zylinderblock integral an einem der zwei Teile des Maschinenblocks (32, 33) ausgebildet ist.

2. Schwenktyp-Antriebseinheit nach Anspruch 1, bei der ein Antriebsdrehelement (54) des Getriebes (T) an einem Ende der Kurbelwelle (31), die vom Maschinenblock (32, 33) unterstützt ist, vorgesehen ist; wobei im Gehäuse (36, 37) eine Öffnung (77) ausgebildet ist, die erlaubt, das Antriebsdrehelement (54) hindurchzuführen, wenn der Maschinenblock (32, 33) mit dem Gehäuse (37, 38) des Getriebes (T) verbunden wird.

3. Schwenktyp-Antriebseinheit nach Anspruch 1, bei der das Getriebe (T) ein stufenloses Riemengetriebe ist; wobei der Maschinenblock (32, 33) mittels mehrerer Bolzen (74, 75) integral mit dem Gehäuse (37, 38) des Getriebes (T) an Verbindungsabschnitten verbunden ist, die den Außenumfang der Kurbelwelle (31) umgeben, derart, dass in den Verbindungsabschnitten Räume (S) ausgebildet werden, die wärmeisolierende Luftschichten bilden.

## Revendications

1. Unité d'entraînement de type oscillant supportée de manière oscillante par une ossature de carrosserie (F) d'une motocyclette ou d'un tricycle à moteur de petite dimension, comprenant :
un moteur (E) comportant un bloc-cylindres pour contenir un piston (42) ; et
une transmission (T) pour transmettre une force d'entraînement dudit moteur (E) à une roue motrice (Wr), ladite transmission (T) étant raccordée d'un seul tenant audit moteur (E) ;
dans laquelle un bloc-moteur (32, 33) pour supporter un vilebrequin (31) dudit moteur (E) est divisé en deux parties le long d'un plan de séparation (P₁) et est séparable d'un carter (37, 38) de ladite transmission (T),
**caractérisée en ce que** le plan de séparation (P1) divisant ledit bloc-moteur (32, 33) en deux parties comprend la ligne axiale dudit vilebrequin (31) ; et
ledit bloc-cylindres est formé de manière solidaire sur l'une desdites deux parties dudit bloc-moteur (32, 33).

2. Unité d'entraînement de type oscillant selon la revendication 1, dans laquelle un élément rotatif d'entrée (54) de ladite transmission (T) est disposé à une extrémité dudit vilebrequin (31) supporté par ledit bloc-moteur (32, 33) ; et une ouverture (77) pour permettre audit élément rotatif d'entrée (54) de passer à travers celle-ci lorsque ledit bloc-moteur (32, 33) est raccordé audit carter (37, 38) de ladite transmission (T) est formée dans ledit carter (36, 37).

3. Unité d'entraînement de type oscillant selon la revendication 1, dans laquelle ladite transmission (T) est une transmission à changement de vitesses continu du type à courroie ; et ledit bloc-moteur (32, 33) est raccordé d'un seul tenant audit carter (37, 38) de ladite transmission (T) au niveau de parties de raccordement entourant la périphérie extérieure dudit vilebrequin (31) à l'aide d'une pluralité de boulons (74, 75) de sorte que des espaces (S) constituant des couches d'air calorifuges sont formés dans lesdites parties de raccordement.
